# EUROPÄISCHE PATENTSCHRIFT

(11) **EP 1 952 120 B1**
(45) Veröffentlichungstag und Bekanntmachung des Hinweises auf die Patenterteilung: **11.07.2018**
(21) Anmeldenummer: 06818273.2
(22) Anmeldetag: 23.10.2006
(51) Int. Cl.: G01Q 10/06, G01Q 30/04

(54) **RASTERSONDEN-MIKROSKOP MIT EINER PROGRAMMIERBAREN LOGIK**
SCANNING PROBE MICROSCOPE PROVIDED WITH A PROGRAMMABLE LOGIC
MICROSCOPE À SONDE DE BALAYAGE, COMPORTANT UNE LOGIQUE PROGRAMMABLE

(30) Priorität: 22.11.2005 DE 102005055460; 22.11.2005 US 738903 P
(43) Veröffentlichungstag der Anmeldung: 06.08.2008
(60) Teilanmeldung: 17195588.3
(73) Patentinhaber: WITec Wissenschaftliche Instrumente und Technologie GmbH, 89081 Ulm (DE)
(72) Erfinder: KOENEN, Joachim, 89081 Ulm (DE); VOLSWINKLER, Gerhard, 88471 Laupheim (DE); SPIZIG, Peter, 89077 Ulm (DE)
(74) Vertreter: Sawodny, Michael-Wolfgang
(86) Internationale Anmeldenummer: PCT/EP2006/010186
(87) Internationale Veröffentlichungsnummer: WO 2007/059833

(56) Entgegenhaltungen:
- WO-A-02/48644
- WO-A2-2004/057303
- DE-A1- 19 900 114
- US-A- 5 224 376
- US-A- 5 805 448
- US-B1- 6 215 121
- ROSA-ZEISER A ET AL: "The simultaneous measurement of elastic, electrostatic and adhesive properties by scanning force microscopy: pulsed-force mode operation" MEASUREMENT SCIENCE AND TECHNOLOGY, IOP, BRISTOL, GB, Bd. 8, Nr. 11, 1. November 1997 (1997-11-01), Seiten 1333-1338, XP020064364 ISSN: 0957-0233 in der Anmeldung erwähnt
- LACORT JUANJO ET AL: "An integrated controller for a flexible and wireless Atomic Force Microscopy" PROC SPIE INT SOC OPT ENG; PROCEEDINGS OF SPIE - THE INTERNATIONAL SOCIETY FOR OPTICAL ENGINEERING; VLSI CIRCUITS AND SYSTEMS II 2005, Bd. 5837 PART I, 2005, Seiten 321-328, XP002411230

## Beschreibung

### Gebiet der Erfindung

Die Erfindung betrifft ein Mikroskop, bei dem eine Oberfläche abgerastet wird, ein so genanntes Rastersondenmikroskop. Das Rastersondenmikroskop umfasst wenigstens fünf periphere elektrische Bauteile, wie z. B. einen D/A- oder A/D-Wandler sowie eine programmierbare Logik. Eine besondere programmierbare Logik ist ein so genanntes programmable gate array (FPGA). Bevorzugt ist in der vorliegenden Erfindung die programmierbare Logik als FPGA ausgeführt.

### Beschreibung des Standes der Technik

Das Rastersondenmikroskop dient bevorzugt zur Erzeugung der Abbildung einer Oberfläche einer zu untersuchenden Probe. Bei einer derartigen Abbildung kann die Auflösung lateral zur Oberfläche besser als 1µm und senkrecht zur Oberfläche besser als 100 nm sein. Die Rastersonde rastert die Oberfläche punktweise ab. In einer Anwendung, die lediglich beispielhaft, nicht jedoch einschränkend zu verstehen ist, wird an jedem Rasterpunkt der Probenoberfläche der Abstand zwischen Rastersonde und Probenoberfläche periodisch moduliert, so dass sich beispielsweise eine Kraft-Zeit-Kurve ergibt. Diese Kraft-Zeit-Kurve kann dann ausgewertet und der Verlauf unterschiedlicher Oberflächenparameter ermittelt werden. Eine Rastersonde kann aber auch eine optische Sonde sein, mit der Licht auf eine abzurasternde Oberfläche gelenkt wird, beispielsweise mittels einer Cantilever-Spitze in die Laserlicht eingekoppelt wird. Bezüglich der optischen rasternden Nahfeldmikroskopie wird auf die US 5,756,977, die DE 199 02 235 A1 sowie die DE 199 02 234 A1 verwiesen. Eine weitere rasternde optische Rastersondenmikroskopie ist die Rastersonden-Raman-Spektroskopie/Mikroskopie.

In vorliegender Anmeldung wird unter Rastersondenmikroskopie somit sehr allgemein ein Mikroskop verstanden, bei dem eine Probenoberfläche punktförmig abgerastet wird. Diesem Begriff des Rastersonden-Mikroskopes bzw. der Rastersondenmikroskopie unterfallen somit beispielsweise die Raster-Kraft-Mikroskopie sowie die Raster-Tunnel-Mikroskopie. Die Rastersondenmikroskopie ist daher nicht auf eine Rastersondenmikroskopie beschränkt, bei der mit Hilfe einer Rastersonde Kraft-Zeit-Kurven aufgenommen werden. Die Beschreibung der Erfindung für ein Rastersondenmikroskop bei der Kraft-Zeit-Kurven aufgenommen werden, dient daher lediglich der beispielhaften besseren Darstellung der Erfindung, ist aber keinesfalls einschränkend zu verstehen. Die Rastersondenmikroskopie, bei der Kraft-Zeit-Kurven aufgenommen werden, ist lediglich eine bevorzugte Ausführungsform.

Im Stand der Technik sind eine Vielzahl von Verfahren zur Abbildung von Probenoberflächen mittels von Rastersonden beschrieben worden.

Eine Möglichkeit der Untersuchung einer Probenoberfläche und der Erzeugung eines Oberflächenbildes mittels einer Rastersonde besteht darin, die Rastersonde in Kontakt mit der Probenoberfläche zu bringen und anschließend die ProbenOberfläche abzurastern. Ein derartiges Abbildungsverfahren wird als "contact-mode" bezeichnet und dient beispielsweise der Bestimmung der Topographie sowie der lokalen Reibung. Betreffend das "contact-mode-Verfahren" wird auf nachfolgende Veröffentlichungen:
- Maivald P, Butt H-J, Gould S A C, Prater C B, Drake B, Gurley J A, Elings V B und Hansma P K (1991), Using force modulation to image - surface elasticities with the atomic force microscope, Nanotechnology, 2, 103-105 und
- Marti O und Colchero J, 1992, Reibungsmikroskopie, Phys. Blätter 48, 107
verwiesen.

Um eine Oberfläche vor Deformationen oder Zerstörung zu schützen, ist es vorteilhaft, die Probenoberfläche mit Hilfe eines Verfahrens zu untersuchen, bei dem die Rastersonde nicht in Kontakt mit dieser steht. Dieses Verfahren wird in der Literatur allgemein als "non-contact-mode" bezeichnet. Es ist ein Verfahren, mit dem eine Zerstörung der Probenoberfläche vollständig ausgeschlossen werden kann. Ein Nachteil dieses Verfahrens besteht jedoch darin, daß die Auflösung mit wachsendem Abstand zwischen Rastersonde und Probenoberfläche abnimmt und keinerlei mechanische Probeneigenschaften untersucht werden können.

Bezüglich des "non-contact-mode" wird auf nachfolgende Veröffentlichungen verwiesen:
- Martin Y, Williams C C and Wickramasinghe H G, (1987), Atomic force microscope-force mapping and profiling on a sub 100-Ä scale J. App. Phys., 61, 4723;
- Sarid D, Ruskell T G, Workman R K und Chen D, (1996), J. Vac. Sei. Technol. B, 14, 864-7.

Ein Verfahren, das die Untersuchung von weichen Probenoberflächen, wie beispielsweise die von Polymeren, erlaubt, andererseits aber ausreichend Information der Probenoberfläche zur Verfügung stellt, ist das sogenannte "intermediate-contact-mode"-Verfahren, bei dem eine Rastersonde zu Oszillationen nahe ihrer Resonanzfrequenz angeregt wird. Die oszillierende Rastersonde wird dann an die Probe angenähert, bis sie die Probenoberfläche berührt. Der Phasen-Shift zwischen der freien Schwingung in Luft und der Schwingung, wenn sich die Rastersonde an die Oberfläche annähert, hängt von den viskoelastischen Eigenschaften der Probe und dem adhäsiven Potential zwischen Probe und Rastersonde ab. Auf diese Art und Weise lassen sich elastische Eigenschaften bestimmen.

Bezüglich des "intermediate-contact-mode-Verfahrens" wird auf
Spatz J, Sheiko S, Möller M, Winkler R, Reineker P und Marti O, (1995), Forces affecting the substrate in the resonant tapping force microscopy, Nanotechnology, 6, 40-44
Digital Instruments, Incorporated, United States Patent No. 5,412,980 (1995) Tapping atomic force microscope
Digital Instruments, Incorporated, United States Patent No. 5,519,212 (1996) Tapping atomic force microscope with phase or frequency detection
verwiesen.

Beim "intermediate-contact-mode-Verfahren" sind die beiden Größen Amplitude und Phasen-Shift von einer Vielzahl von Variablen abhängig, so dass eine einfache Zuordnung zu einer physikalischen Größe nicht möglich ist.

Eine einfache Zuordnung zu einer physikalischen Größe ergibt sich, wenn die gesamte Kraft-Weg- bzw. Kraft-Zeit-Kurve bei Annähern der Rastersonde an die Probenoberfläche aufgenommen wird. Diese Kurve umfasst sämtliche Informationen der Wechselwirkungskräfte zwischen Rastersonde und Probe und erlaubt eine präzise Bestimmung der viskoelastischen Eigenschaften und der adhäsiven Kräfte.

Bezüglich dieses Verfahrens wird auf
- Radmacher M, Cleveland J P, Fritz M, Hansma H G und Hansma PK, (1994) Mapping interaction forces with the atomic force microscope Biophys. J, 66, 2159 - 65;
- Radmacher M, Fritz M, Cleveland J P, Walters D A und Hansma P K (1994) Imaging adhesion forces and elasticity of lysozyme adsorbed on mica with the atomic force microscope, Langmuir 10, 3809-14;
- Van der Werf K O, Putman C A J, Groth B G and Greve J (1994), Adhesion force imaging in air and liquid by adhesion mode atomic force microscopy Appl. Phys. Lett, 65, 1195-7;
- Mizes H A, Loh K-G, Miller R J D, Ahujy S K and Grabowskie E F (1991), Submicron probe of polymer adhesion with atomic force microscopy; dependence on topography and material Inhomogenities Appl. Phys. Lett. 59, 2901-3
verwiesen.

Um die Scan-Geschwindigkeit gegenüber den zuvor beschriebenen Verfahren zu erhöhen, kann die sogenannte "Pulsed-Force-Mode"-Mikroskopie eingesetzt werden. Bei der "Pulsed-Force-Mode (PFM)"-Mikroskopie wird die Rastersonde periodisch in z-Richtung, das heißt in senkrechter Richtung relativ zur Probenoberfläche in Oszillationen versetzt und die Kraft-Zeit-Kurve, die ein Abbild der Kraft-Weg-Kurve ist, aufgenommen und bestimmte Parameter dieser Kraft-Zeit-Kurve ausgewertet, um ein Abbild der Probenoberfläche zu erhalten.

Bezüglich der "Pulsed-Force-Mode"-Mikroskopie wird auf
- Rosa A, Weiland E, Hild S und Marti O, The simultaneous measurement of elastic, electrostatic and adhesive properties by scanning force microscopy: "pulsed-force-mode-operation", Meas. Sei. Technol. 8, (1997), 1-6
verwiesen.

Nachteilig an dem Abbildungsverfahren einer Probe mit Hilfe der "Pulsed-Force-Mikroskopie", wie in oben genanntem Dokument beschrieben, ist, dass Trigger zur Verarbeitung der Analog-Signale gesetzt werden müssen. Da sich die Auswertung der Pulsed-Force-Kurve im Wesentlichen auf den Zeitpunkt des Auftreten der Trigger beschränkt, hatte dies Ungenauigkeiten zur Folge und optimale Signale konnten nur schwer erhalten werden.

Des Weiteren waren die Möglichkeiten der Auswertung der Kraftkurven sehr beschränkt. Materialwissenschaftlich relevante oder quantitative Messwerte lassen sich aus diesem Verfahren nur schwer gewinnen.

Die WO 02/48644 schlägt daher ein Verfahren zur Aufnahme einer Probenoberfläche mit einer Rastersonde vor, bei dem die aufgenommenen Messkurven mittels eines A/D-Wandlers digitalisiert werden. Der digitale Datenstrom kann dann ausgewertet und die digitalen Daten zur Regelung der Rastersonde verwendet werden. Neben dem Verfahren ist aus der WO 02/48644 auch ein Rastersonden-Mikroskop bekannt geworden, bei dem die aufgenommenen Daten vor deren Weiterverarbeitung digitalisiert werden, beispielsweise in einem A/D-Wandler und die zur Regelung verwendeten Größen mittels D/A-Wandler in analoge Signale zurückgewandelt werden.

Gemäß dem Stand der Technik, wie in der WO 02/48644, können die Regelungen entweder komplett analog aufgebaut sein oder digital gesteuerte Analogregler oder komplett digitale Regler sein. Auch Mischformen sind möglich. Die Schalter, Relais, Schrittmotoren und dergleichen werden im Stand der Technik über digitale Eingabe-/Ausgabe-Kanäle (DIO)-Kanäle) angesteuert. Das Steuer-, Regel- und Messwerterfassungsgerät des Rastersonden-Mikroskops wird von einem Rechner mit einer Busarchitektur typischerweise einem Personal Computer (PC), mittels einer speziellen Software gesteuert. Meist sind zwischen diesem Rechner mit Busarchitektur, den Wandlern, den digitalen Eingabe/Ausgabe-Einrichtungen (DIO) noch ein oder mehrere Microcontroller (MC) oder Digitale SignalProzessoren (DSP), die dann gemäß den Vorgaben des Mikrocomputers die Digital-Analog-Wandler (DAC), die Analog-Digital-Wandler (ADC) und die digitale Eingabe-/Ausgabe-Einrichtungen (DIO) ansteuern, gegebenenfalls digital regeln und die Messwerte an den Mikrocomputer senden, eingebaut. Die Ansteuerung sämtlicher peripherer Bauteile geschieht im Stand der Technik stets mit Hilfe eines Datenbussystems. In der vorliegenden Anmeldung wird unter einem Datenbussystem bzw. einem Datenbus verstanden, das mehr als zwei Bauteile, d.h. mehr als zwei Teilnehmer über Adress- und Datenleitungen den Bus als sogenannten Multi-Drop-Bus nutzen.

Auch das Rastersonden-Mikroskop gemäß der WO 02/48644 ist demgemäß aufgebaut. Bei dem aus der WO 02/48644 bekannten Rastersonden-Mikroskop ist zwar bekannt, dass die Auswertung des digitalen Datenstromes mit Hilfe einer programmierbaren Logik erfolgen kann, die Ansteuerung der peripheren Bausteine erfolgt aber durch Controller bzw. Mikrocomputer über ein Datenbussystem wie im Stand der Technik. Die Datenübertragung mittels eines Bussystems hat aber eine Vielzahl von Nachteilen.

Da die Controller bzw. die digitalen Signalprozessoren (DSP) die peripheren Geräte wie bspw. die D/A-Wandler, die A/D-Wandler oder die digitalen Ein- und Ausgabeeinrichtungen über einen Bus oder mehrere Busse, die als Multi-Drop-Busse ausgelegt sind, ansteuern, müssen diese über eine elektronische Digitaltechnik verfügen, die den Zugriff auf den Bus bspw. des Controllers oder des Mikroprozessors regelt und die Anforderungen seitens des Mikrocontrollers oder des digitalen Signalprozessors decodiert. Die Synchronisation der Analog/Digital-Wandler bzw. der Digital/Analog-Wandler sowie der digitalen Eingabe- und Ausgabeeinrichtungen erfordert darüber hinaus weitere Logikkomponenten um bspw. eine Rasterbewegung, bei der mehr als ein Kanal gleichzeitig bewegt werden soll, zu synchronisieren und die zu jedem Rasterpunkt gehörenden Messwerte gleichzeitig zu messen. Des Weiteren ist eine aufwendige Terminierung der Leitungen notwendig, um die Datenintegrität zu erhalten.

Aus der WO 2004/057303 ist ein Controller für ein Rastersonden-Mikroskop bekannt geworden, bei dem eine programmierbare Logik in Form von FPGA's verwendet werden. In der WO 2004/057303 wird aber nicht die gesamte Steuereinheit des Rasersonden-Mikroskops als programmierbare Logik ausgeführt, sondern lediglich ein Teil, nämlich der Lock-in-Verstärker, der als digitaler zwei-Phasen-Lock-in-Verstärker in programmierbarer Logik ausgelegt wird. Dieser in programmierbarer Logik ausgelegte, vollständig digitale Lock-in-Verstärker wird mit einem digitalen Signalprozessor verbunden, der wiederum Teil des Controllers ist. Die programmierbare Logik in Form eines FPGA ist in der WO2004/057303 lediglich ein Hilfsbauteil des digitalen Signalprozessors zur Signalvorverarbeitung und nicht der Controller selbst. So umfasst in der WO2004/057303 der digitale Signalprozessor und **nicht** die programmierbare Logik, die Regler des Rastersonden-Mikroskops, der die Steuerleitungen regelt, sowie den gesamten Scan des Rastersonden-Mikroskops. Und der digitale Signalprozessor kommuniziert mit allen peripheren Geräten über einen Multi-Drop-Bus.

Ein weiterer Nachteil derartiger Systeme gemäß dem Stand der Technik ist deren Unflexibilität. Will man bei einem System gemäß dem Stand der Technik nämlich ein neues peripheres Gerät hinzufügen, so ist eine neue Abstimmung des Bus-Timings erforderlich, da die zusätzliche Datenlast dieses Gerätes automatisch das Bussystem zusätzlich fordert. Der durch dieses Bussystem verursachte Engpass wird durch den digitalen Signalprozessors oder Mikrocontrollers noch verstärkt, da auch im Mikrocontroller bzw. Prozessor immer nur ein Befehl oder einige wenige parallele Befehle ausgeführt werden können.

Außerdem ist bei einem System gemäß dem Stand der Technik mit einem Multi-Drop-Bus jedes periphere Gerät sehr aufwendig aufgebaut, da Teile des peripheren Bauteiles benötigt werden, um das von dem Multi-Drop-Bus verwendete Busprotokoll, beispielsweise die Adressdecodierung oder die Busarbitrierung zu implementieren. Des Weiteren ist die Leitungsterminierung von mehr als zwei Leitungen bei einem Bussystem sehr kompliziert und aufwendig.

### Beschreibung der Erfindung

Aufgabe der Erfindung ist es somit, die Nachteile des Standes der Technik zu überwinden und ein Rastersonden-Mikroskop zur Verfügung zu stellen, das sich durch eine schnelle Datenaufnahme, Datenweiterverarbeitung und hohe Flexibilität auszeichnet.

Erfindungsgemäß wird diese Aufgabe durch die Merkmale von Anspruch 1 gelöst.

Bei einem erfindungsgemäßen Rastersonden-Mikroskop sind wenigstens fünf periphere Geräte direkt mit einer programmierbaren Logik ohne Zwischenschaltung eines Multi-Drop-Bus-Systems verbunden.

### Betreffend programmierbare Logiken wird auf

### Ashok K. Sharma:

"Programmable Logic Handbook: PLDs, CPLDs and FPGAs (McGraw-Hill Professional Publishing; ISBN: 0070578524)" oder
"W. Bolton, Bill Bolton: Programmable Logic Controllers : An Introduction (Butterworth-Heinemann; ISBN: 0750647469)" verwiesen.

Eine programmierbare Logik umfasst eine große Anzahl von Logik-Bauteilen bzw. logischen Elementen bzw. Logik-Schaltungen, wie beispielsweise UND-Gatter, ODER-Gatter, Flip-Flops oder Speicherelemente. Die einzelnen Logik-Bauteile können mit Hilfe einer Netzliste und über frei konfigurierbare Schaltungen gemäß einem Schaltplan verschaltet werden. Im Gegensatz zu ASIC-Bausteinen ist diese Verschaltung keine feste Verschaltung, sondern kann jederzeit mit Hilfe der Netzliste verändert werden. Die freie Konfigurierbarkeit bedingt ein hohes Maß an Flexibilität. Die Verschaltung der Logikbauteile geschieht mit Hilfe von Transistoren, die gemäß der Netzliste, die ein Abbild des Schaltplanes ist, aufgeschaltet werden.

Mit Hilfe geeigneter Verschaltungen der Logik-Bauteile können in der programmierbaren Logik ganze Mikroprozessoren oder digitale Signalprozessoren (sog. DSP) dargestellt werden. Diese werden als sogenannte Softcores oder Soft-IP-Cores bezeichnet. Es ist auch möglich, hardwaremäßig realisierte Prozessoren oder digitale Signalprozessoren in eine programmierbare Logik zu integrieren. Hardwaremäßig realisierte Prozessoren bzw. digitale Signalprozessoren werden auch als Hard-IP-Cores bezeichnet.

Durch einen derartigen Aufbau wird erreicht, dass das Rastersonden-Mikroskop eine hohe Flexibilität aufweist, da bei dem erfindungsgemäßen System die zentrale Steuereinheit als programmierbare Logik verwirklicht ist und insoweit bei einer Hinzufügung eines peripheren Bauteils oder eines Austauschs eines peripheren Bauteils lediglich die programmierbare Logik über die Netzliste neu konfiguriert werden muss, nicht jedoch aber die gesamte hardwaremäßige Architektur des Systems. Eine Abstimmung peripherer Bausteine auf eine Busarchitektur ist nicht mehr notwendig. Gegenüber einer Busarchitektur ist es vielmehr möglich, die einzelnen peripheren Bausteine direkt mit der programmierbaren Logik in einer Sterntopologie zu verbinden. Die Sternverkabelung ermöglicht das parallele Ansteuern und Regeln der peripheren Bauteile mit sehr hohen Datenraten von mehr als 100 kHz. So können bspw. digitale Login-Verstärker im Bereich einiger MHz verwirklicht werden. Die Reaktionszeit der Regelung, die bei bisherigen Systemen im µs-Bereich lag, liegt bei dem erfindungsgemäßen System durch den Einsatz der programmierten Logik im Bereich von ns. Mit der Erfindung wird es erstmals möglich, einen Controller als System auf einem Chip oder sogar als System auf einem programmierbaren Chip, einem sogenannten programmable Chip, zu realisieren. Hierdurch wird es möglich, eine Sterntopologie zu realisieren, das gegenüber Systemen gemäß dem Stand der Technik mit einem Bus, ein stark vereinfachtes Routing ermöglicht. Des Weiteren sind die Rauscharmut der Wandler sowie die elektromagnetische Verträglichkeit verbessert. Eine aufwendige Terminierung wie bei Multi-Drop-Bussen kann entfallen. Eine Erweiterung des Systems ist sehr einfach möglich, da keine Adressdecodierungs- oder Arbitrierungslogik nötig ist. Das Timing-Verhalten ist streng deterministisch.

Mit Hilfe des erfindungsgemäßen Rastersonden-Mikroskops mit programmierbarer Logik, wobei in der programmierbaren Logik auch der Regler dargestellt wird, ist es möglich, Rasterbewegung in 2 oder 3 Dimensionen zu steuern, Messwerte wie z. B. Lichtintensitäten, Zahl der Lichtquanten, elektrische Ströme und Spannungen, mechanische Größen wie z. B. Kräfte, Deformationen, Schwingungsamplituden und -Phasen, Positionen, Spektren während der Rasterbewegung zu erfassen und mittels einer Regelung auf Sollwerte zu regeln. Des Weiteren können auch noch diverse Schalter, Relais, Schritt- oder Gleichstrommotoren, Kameras, Beleuchtungen, Shutter, Klappspiegel, elektrische Spannungen für kombinierte Experimente und dergleichen angesteuert werden. Zur Ansteuerung der diversen Schalter, Relais, Schritt-oder Gleichstrommotoren etc. sind keine analogen Crosspoints mehr nötig. Stattdessen kann ein in der programmierbaren Logik realisierter Multiplexer eingesetzt werden.

Bei der Steuerung der Rasterbewegung ist eine parallele Ansteuerung der Achsen des Rastersonden-Mikroskops, nämlich der beiden Achsen in der x-y-Ebene sowie in z-Richtung, in der Höheninformation gewonnen wird, möglich.

Durch die parallele Ansteuerung der Scanbewegung und Regelung werden gegenüber dem Stand der Technik glattere Bewegungen ermöglicht, da nicht eine zentrale Recheneinheit zwischen verschiedenen Tasks hin- und herschalten muss.

Des Weiteren ist es möglich, auch externe Geräte wie CCD-Kameras mit der Rasterung zu synchronisieren.

Ein weiterer Vorteil des Systems ist seine einfache Wartung.

So ist es möglich, da das gesamte System als programmierbare Logik verwirklicht ist, im Servicefall beim Kunden eine Wartung in vielen Fällen ausschließlich über einen softwaremäßigen Zugang zur Netzliste, die die Verschaltung der programmierbaren Logik definiert, zu bewerkstelligen.

Des Weiteren verbessert sich das sogenannte EMV-Verhalten sowohl, was die elektromagnetische Abstrahlung als auch die Störfestigkeit anbelangt, da ein Großteil der Datenverarbeitung, insbesondere die hochfrequente digitale Datenverarbeitung, in der programmierbaren Logik, die als FPGA-Chip ausgelegt ist, bei niedrigen Spannungen zwischen 1,2 Volt und 1,5 Volt stattfindet. Da die Signalfrequenz auf den externen digitalen Leitungen auf ein Minimum beschränkt ist, verbessert sich auch das Signal/Rausch-Verhältnis der analogen Ein- und Ausgänge. Die programmierbare Logik in Form eines Field-programmable-gatearrays (FPGA) wird über Netzlisten so verschaltet, dass die programmierbare Logik alle gleichzeitig ablaufenden Aufgaben parallel verarbeitet.

Das hier beschriebene Rastersonden-Mikroskop mit programmierbarer Logik bietet aufgrund der freien Konfigurierbarkeit den Vorteil, dass das Rastersonden-Mikroskop ohne Änderungen der festverdrahteten Elektronik neue oder erweiterte Funktionalitäten erhalten kann. Das Rastersonden-Mikroskop ist als System auf einem programmierbaren Chip verwirklicht.

Eine Neukonfiguration ist bspw. über eine geänderte Netzliste mit einem Mikrocomputer innerhalb weniger Sekunden möglich. Dies ermöglicht das Hinzufügen neuer, beispielsweise schnellerer Bauteile auf einfache Art und Weise. Hierfür ist lediglich die Netzliste an die entsprechende Logik anzupassen.

Auch Schnittstellen sind im Sinne der vorliegenden Anmeldung periphere Geräte. Beispiele für Schnittstellen sind die RS232-Schnittstelle, die IEEE-Schnittstelle, die TCP/IP-Schnittstelle, die Ethernet-Schnittstelle oder eine USB-Schnittstelle. Die vorgenannten Schnittstellen werden direkt mit der programmierbaren Logik ohne Zwischenschaltung eines Datenbusses verbunden.

Das Rastersonden-Mikroskop gemäß der Erfindung umfasst einen oder mehrere A/D-Wandler, einen oder mehrere D/A-Wandler, einen oder mehrere digitale Eingabe-/Ausgabeanschlüsse.

Bei den A/D-Wandlern handelt es sich bevorzugt um solche mit einer Breite von 14 bit oder mehr, beispielsweise 16 bit und einer Taktfrequenz von mehr als 100 kSamples/s, bevorzugt mehr als1 MSamples/s oder mehr als 5 MSamples/s.

Bevorzugt ist jeder Messleitung bzw. Steuerleitung ein eigener A/D-Wandler zugeordnet. Ein analog arbeitender Multiplexer, der die Messwerte einer Vielzahl von Datenkanälen einliest und an einen einzigen A/D-Wandler weiterleitet, ist dann nicht erforderlich. Durch den Verzicht auf einen analogen Multiplexer wird das Signal-Rausch-Verhältnis der einzelnen Datenkanäle verbessert und ein Übersprechen zwischen unterschiedlichen Datenkanälen verhindert.

In einer besonders bevorzugten Ausführungsform umfasst das Gerät mindestens fünf Analog-Digital-Wandler.

Das Rastersonden-Mikroskop weist jeweils drei D/A-Wandler auf, wobei ein D/A-Wandler einen Offset auf einem analogen Ausgang erzeugt und der zweite D/A-Wandler die Referenzspannung für den dritten D/A-Wandler erzeugt und die analoge Addition der Ausgänge von dem ersten D/A-Wandler und dem dritten D/A-Wandler den eigentlichen analogen Ausgang darstellt.

Die Anzahl der D/A-Wandler beträgt bevorzugt mehr als vier. Die D/A-Wandler weisen eine Breite von 14 bit oder mehr auf sowie eine Abtastrate von mehr als 100 kSamples/s, bevorzugt mehr als 5 MSamples/s, bevorzugt 50 MSamples/s auf.

Ganz besonders bevorzugt ist es, wenn bei dem Rastersonden-Mikroskop die D/A-Wandler durch die programmierbare Logik digital angesteuert werden und mit Hilfe der A/D-Wandler und der D/A-Wandler ein oder mehrere geschlossene Regelkreise ausgebildet werden können.

Insbesondere ist es vorteilhaft, wenn eine Positioniereinrichtung zum Positionieren und Abrastern in ein, zwei oder drei Dimensionen angesteuert und/oder geregelt werden kann.

Die digitale Eingangs- und Ausgangsschnittstelle kann eine TTL-Leitung, eine RS232-Schnittstelle, eine I2C-Schnittstelle, eine Ethernet-Schnittstelle oder eine USB-Schnittstelle darstellen. Die Eingangs-/Ausgangsschnittstelle (DIO) bzw. die Ausgangsschnittstelle (DO) kann in einer bevorzugten Ausführungsform der Erfindung dazu dienen, Schrittmotoren, Klappspiegel, Filterräder, Filterschieber, Laser, Shutter, Spektrometer, Spektrographen, Zähler, Ein-/Ausschalter, CCD-Kameras, Scansysteme anzusteuern, bzw. Daten von diesen Systemen aus- und einzulesen. Die Schnittstellen können auch Schnittstellen sein, die Verbindungen zu peripheren Geräten, die als Mikrocomputer oder digitale Signalprozessoren ausgebildet sind, herstellen. Eine derartige Verbindung kann über das Ethernet, TCP/IP, USB, oder eine Schnittstelle mit Datenpufferung über FIFO erfolgen. Die Datenübertragungsrate beträgt hierbei mehr als 10 Mbytes, bevorzugt mehr als 20 Mbytes.

Auch eine Verbindung zu weiteren programmierbaren logischen Netzwerken ist möglich.

Die Erfindung kann in jeder Art von Rastersondenmikroskopen verwendet werden, insbesondere auch in einem Raster-Kraft-Mikroskop oder einem Rastertunnel-Mikroskop. Ein Rastersonden-Mikroskop gemäß der Erfindung kann bspw. für die Aufnahme und Auswertung von Kraft-Distanz-Kurven verwendet werden.

Ein derartiges Rastersonden-Mikroskop wird nachfolgend lediglich beispielhaft beschrieben, die nachfolgende Beschreibung ist keinesfalls einschränkend zu lesen.

Aus Kraft-Distanz-Kurven können mit einer einzigen Messung verschiedenste Probenparameter wie z.B. viskoses, adhäsives und elastisches Verhalten getrennt erfasst werden. Da die Kraft-Distanz-Kurven am Ende einer Messung vollständig digital vorliegen und somit gegebenenfalls einem Postprocessing unterworfen werden können, stehen die gespeicherten Daten auch zur nachträglichen Aufklärung von Messartefakten zur Verfügung.

In einer Ausführungsform der Erfindung beträgt die Frequenz der periodischen Bewegung der Rastersonde zur Aufnahme von Kraft-Distanz-Kurven in der Richtung senkrecht zur Probenoberfläche 1 Hz bis 20 kHz, und die Amplitude liegt im Bereich von 10 bis 500 nm. Vorteilhafterweise werden dabei sinusförmige oder sinusähnliche Anregungen gewählt, wobei aber auch andere wie sägezahn- oder trapezförmige Anregungen vorteilhaft sein können. Eine Analyse der tatsächlichen Bewegung der Rastersonde ermöglicht es, die Form der Anregung so zu modifizieren bzw. zu verändern, dass die Sonde die gewünschte periodische Bewegung ausführt.

Aus der Kraft-Distanz-Kurve kann als charakteristische Größe z. B. der maximale repulsive Kraft-Wert aus der digitalisierten Kraft-Zeit-Kurve ermittelt werden, der sich ergibt, während die Rastersonde in Kontakt mit der Oberfläche ist.

Als weitere charakteristische Größe kann die Differenz zwischen einem Punkt im ansteigenden oder abfallenden Ast der Kraft-Zeit-Kurve zur Maximalkraft bestimmt werden. Diese Differenz ist dann ein quantifizierbares Maß für die lokale Steifigkeit der Probe und ergibt aufgetragen über dem abgetasteten Bereich ein Steifigkeitsbild der Oberfläche.

Eine weitere charakteristische Größe ist der minimale attraktive Kraftwert beim Ablösen der Spitze von der Probenoberfläche aus der Kraft-Zeit-Kurve.

Dieser charakteristische Wert ist ein quantifizierbares Maß für die lokale Adhäsion der Probe und ergibt ein Adhäsionsbild der Oberfläche, wenn sie über dem abgetasteten Bereich aufgetragen wird.

Als weitere charakteristische Größe kann der minimale Kraftwert beim Anschnappen der Probensonde an die Probenoberfläche bestimmt werden. Dieser minimale Kraftwert ist ein quantifizierbares Maß für die lokale Anziehung der Probe. Trägt man diese charakteristische Größe über dem abgetasteten Bereich auf, so kann man ein Anziehungsbild der Probe erhalten.

Steifigkeitsbilder der Probe lassen sich aber auch noch auf andere Art und Weise aus der aufgenommenen Kraft-Zeit-Kurve ermitteln. In einer ersten Ausführungsform wird ein Steifigkeitsbild dadurch erhalten, das als charakteristische Größe die Steigung der Kraft-Zeit-Kurve zu einer bestimmten Zeit beim Eindrücken der Probensonde in die Probenoberfläche ermittelt wird. Diese Steigung ist ein quantifizierbares Maß für die lokale Steifigkeit der Probe.

Alternativ hierzu kann man die Steigung zu einem bestimmten Relativzeitpunkt der Kraft-Zeit-Kurve beim Wegziehen der Probensonde von der Probe bestimmen. Auch diese Steigung ist ein quantifizierbares Maß für die lokale Steifigkeit der Probe und ergibt bei einem Auftrag über dem abgetasteten Bereich ein Steifigkeitsbild derselben.

Eine weitere charakteristische Größe ist die Frequenz des freien Ausschwingens des Cantilevers. Diese Größe ist ein quantifizierbares Maß für aufgesammelte Verunreinigungen oder Beschädigungen der Spitze.

Eine weitere charakteristische Größe der digitalisierten Kraft-Zeit-Kurve ist das Verhältnis zwischen dem minimalen Kraftwert beim Ablösen von der Probenoberfläche und dem gemessenen Kraftwert, der beim ersten darauf folgenden lokalen Kraftmaximum bestimmt wird. Dieser charakteristische Wert ist ein quantifizierbares Maß für die Energiedissipation beim Ablösen der Spitze von der Probe.

Ermittelt man aus der Kraft-Zeit-Kurve die Anstiegszeit vom Beginn des Kontaktes bis zur maximalen Kraft, so kann man ein Anstiegszeitenbild der Probenoberfläche generieren. Auf analoge Art und Weise ist es möglich, durch Ermitteln der Abfallzeit aus der digitalisierten Kraft-Zeit-Kurve ein Abfallzeitenbild der Probenoberfläche zu erhalten.

Des Weiteren kann aus der digitalisierten Kraft-Zeit-Kurve die Zeit des repulsiven Kontaktes zwischen Probe und Spitze beziehungsweise die Zeit des Kontaktes zwischen Probe und Spitze bestimmt werden. Diese Zeiten ergeben aufgetragen über dem abgetasteten Bereich ein Repulsivkontaktzeitenbild beziehungsweise ein Kontaktzeitenbild der Probenoberfläche. Ähnlich zu den Kontaktzeiten im repulsiven Bereich der Kraftkurve können in einer fortgebildeten Ausführungsform der Erfindung auch Kontaktzeiten für den adhäsiven Teil der Kraftkurve, etwa vom Kraftminimum bis zum Nulldurchgang der Kraftkurve ermittelt werden.

Diese Zeiten ergeben aufgetragen über dem abgetasteten Bereich ein Abreisszeitenbild der Probenoberfläche.

Neben einer direkten Auswertung einer Kraft-Zeit-Kurve können noch diverse Integrale unter der Kraft-Zeit-Kurve als charakteristische Größen bestimmt werden. Beispielsweise ist es anhand der digitalisierten Kurve möglich, das Integral unter der Kraft-Zeit-Kurve im Bereich des repulsiven Kontaktes bzw. vom Beginn des Kontaktes bis zum Erreichen der maximalen Kraft und vom Erreichen der maximalen Kraft bis zum Nulldurchgang der Kraft zu bestimmen. Diese Integralwerte ergeben aufgetragen über dem abgetasteten Bereich ein Repulsivkontakt-Integralbild der Probe, im Falle des Integrals vom Beginn des Kontaktes bis zum Erreichen der maximalen Kraft ein Bild der an der Probe geleisteten Arbeit sowie im Falle des Integrals vom Zeitpunkt des Erreichens der maximalen Kraft bis zum Nulldurchgang ein Bild der von der Probe geleisteten Arbeit.

Ähnlich zu den Integralen im repulsiven Bereich können aus den digitalisierten Kraft-Zeit-Kurven auch Integrale für den adhäsiven Bereich der Kraftkurve bestimmt werden. Beispielsweise ist es möglich die Fläche unter der Kraftkurve vom Zeitpunkt minimaler Kraft bis zum Zeitpunkt des Nulldurchgangs der Kraftkurve zu bestimmen.

Dieses Integral ist ein Maß für die lokalen viskoelastischen Eigenschaften der Probe.

Berechnet man die Differenz der Integrale im Bereich des repulsiven Kontaktes sowie des Integrales unter der Kraft-Zeit-Kurve von Beginn des Kontaktes bis zum Erreichen der maximalen Kraft, so kann man ein Bild der von der in der Probe dissipierten Arbeit erstellen.

Eines oder mehrere der gewonnenen Auswerteergebnisse können als Regelsignal zur Nachführung der Rastersonde mit der Probentopographie oder zur Steuerung des Modulationssignals verwendet worden. Vorteilhafterweise wird als Regelsignal zur Nachführung der Rastersonde mit der Probentopographie meist die Differenz zwischen dem maximalen repulsiven Kraftwert und dem Kraftwert der sich ergibt, wenn die Rastersonde in der Nähe, aber noch nicht im Kontakt mit der Probe befindet, verwendet, wobei vorteilhafterweise auch auf die Verwendung anderer Größen zurückgegriffen werden kann.

Werden die digitalisierten Kraft-Zeit-Kurven in einem Speicherbereich abgelegt, so können bestimmte Größen der Kraft-Zeit-Kurven durch Postprocessing bestimmt worden.

Die Größen, wie oben dargestellt, d. h. die Kraft-Zeit-Kurve sowie die jeweiligen Positionen des Probentisches und die Daten der Kraft-Zeit-Kurve können mit einer Zeitinformation abgelegt werden. Dies bezeichnet man auch als Zeitstempel. Werden die Größen mit diesem Zeitstempel abgespeichert, bspw. in einem Speicherbereich des FPGA, so folgt hieraus eine parametrische Darstellung der gesamten scannenden Messung. Bei den bisherigen Systemen wurde beispielsweise der Probentisch an eine bestimmte Position verbracht, an dieser Position beispielsweise ein Spektrum z. B. in der scannenden Raman-Mikroskopie mit Hilfe einer CCD-Kamera aufgenommen, die aufgenommenen Daten abgespeichert und der Probentisch dann an eine zweite Position verfahren. Wird hingegen die Position des Probentisches mit einem Zeitstempel belegt, ebenso wie die Messdaten, so können die Daten der Positionsverschiebung des Probentisches sowie der Messdaten beispielsweise der CCD-Kamera kontinuierlich aufgenommen werden, und zwar unabhängig voneinander. Der Zeitstempel lässt eine beliebige Korrelation der Daten zu. Eine Triggerung wie bei den bisherigen Systemen, z. B. ein Verfahren des Probentisches und Aufnahme der Messdaten, ist nicht mehr nötig. Hierdurch kann die Messwertefassung deutlich beschleunigt werden. Des Weiteren können aus den abgelegten Daten verschiedene Ansichten berechnet werden.

Wie zuvor beschrieben, ist aufgrund des Zeitstempels eine Synchronisation der Daten nicht mehr zwingend auf Seiten der Hardware notwendig, sondern sie kann jederzeit in der Software im Nachhinein hergestellt werden. So ist es in diesem Verfahren auch möglich, ein auf einer Soll-Position basierendes Bild mittels der gemessenen Ist-Position zu entzerren.

Bei dem zuvor beschriebenen Rastersonden-Mikroskop zur Aufnahme von Kraft-Zeit-Kurven wird vorteilhafterweise die oszillierende Bewegung der Rastersonde senkrecht zur Probenoberfläche mit Hilfe eines Piezoelementes angeregt.

Alternativ kann vorgesehen sein, dass die Rastersonde eine an einem Balken angeordnete Spitze umfasst und die Mittel zur Aufnahme der Kraft-Zeit-Kurve Mittel zur Messung der Balkendurchbiegung, beispielsweise mit Hilfe der Ablenkung eines Laserstrahles umfassen. Die Ablenkung des Laserstrahles wird bevorzugt mit Hilfe eines Quadrantendetektors oder einer ortsempfindlichen Photodiode erfasst.

### Detaillierte Beschreibung der Erfindung

Die Erfindung soll nachfolgend anhand der Zeichnungen beispielhaft beschrieben werden.

Es zeigen:
- Figur 1: den charakteristischen Verlauf einer Kraft-Zeit-Kurve als Beispiel für eine Messkurve eines Rastersondenmikroskopes, aufgenommen von einem Rastersonden-Mikroskop;
- Figur 2: ein Blockdiagramm für ein erfindungsgemäßes Rastersondenmikroskop
- Figur 3: ein alternatives Ausführungsbeispiel eines Systems gemäß Figur 3

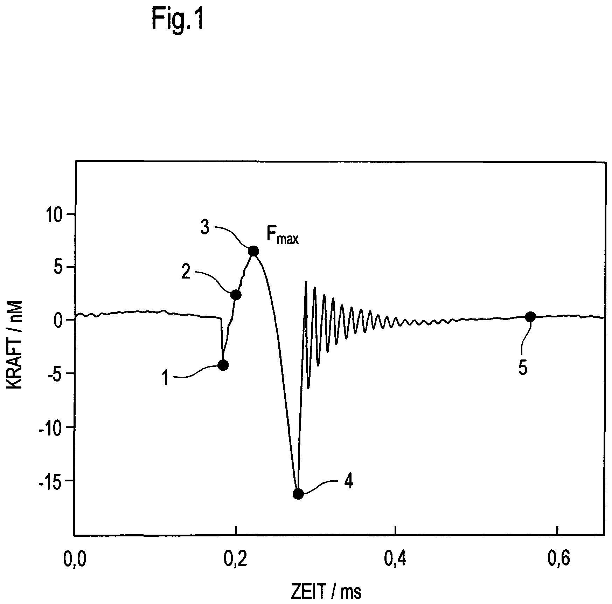

In Figur 1 ist der charakteristische Verlauf einer Kraft-Zeit-Kurve dargestellt, wie er nach Durchlaufen einer Schwingungsperiode einer Rastersonde, eines Rastersondenmikroskopes zur Aufnahme einer derartigen Kurve erhalten wird. Ein Rastersondenmikroskop zur Aufnahme derartiger Kraft-Zeit-Kurven ist in der WO 02/48644 beschrieben. Die Kraft-Zeit-Kurve ist lediglich beispielhaft für eine von einem Rastersondenmikroskop erhaltene Messkurve. Die Schwingungsamplitude der mittels eines Piezoelementes angeregten Schwingung der Rastersondenspitze liegt zwischen 10 und 500 nm, die Schwingungsfrequenz zwischen 1 Hz und 5 kHz, vorliegend im Bereich 1 kHz.

In Figur 1 sind ganz deutlich die charakteristischen Bereiche der sich bei Anregung senkrecht zur Probenoberfläche ergebenden Kraft-Zeit-Kurve zu erkennen, die zur Bestimmung der charakteristischen Größen herangezogen werden können und bei entsprechender Auftragung über dem abgetasteten Bereich die verschiedenen Formen der Abbildung der Probenoberfläche ergeben.

Die in Figur 1 dargestellte Funktion ist bereits auf die Basis- oder Nullinie normiert, das heißt, der Kraftwert der Basislinie der Rastersonde ist zu Null gesetzt. Die Basislinie kann dadurch bestimmt werden, dass man den Bereich der Kraft-Zeit-Kurve ermittelt, in dem sich der Kraftwert nicht mehr verändert. Diesen Wert - hier mit Bezugsziffer 5 belegt - setzt man zu Null, relativ hierzu ermittelt man die anderen Kraftwerte der Kurve.

Zunächst wird die Rastersonde an die Probenoberfläche angenähert. Nach etwa 0,2 Millisekunden kommt aufgrund der negativen attraktiven Anziehungskräfte zwischen Rastersonde und Probe die Sonde in Kontakt mit der Probe. Nachdem die Spitze mit der Probe in Kontakt ist, wird durch das Piezoelement weiter Kraft auf die Rastersonde beziehungsweise die Spitze ausgeübt und so die Spitze in die Probe bzw. Probenoberfläche eingetrieben. Die rücktreibenden repulsiven Kräfte steigen dabei stark an und erreichen im Punkt 3 ein Maximum. Nach einem voreingestellten Weg beziehungsweise einem voreingestellten maximalen Kraftwert Fₘₐₓ wird die Rastersonde nicht mehr in die Probe eingetrieben sondern vom Piezoelement von der Probe zurückgezogen. Diese gerät aufgrund der Adhäsionskräfte allerdings erst bei Erreichen des Kraftminimums am Punkt 4 außer Kontakt mit der Probe und geht in eine freie Schwingung über. Die freie Schwingung klingt ab, bis die Basislinie 5 erreicht wird.

Anschließend wird der Zyklus nochmals wiederholt.

Der Verlauf der Kraft-Zeit-Kurve ist im Prinzip nach für sämtliche Proben, die mit Hilfe der "Pulsed-Force-Mikroskopie" untersucht werden derselbe, jedoch lassen sich aus der Kurve für die jeweilige Probe beziehungsweise für den jeweiligen Punkt der Probe charakteristische Größen ermitteln, die wiederum zusammengesetzt eine Abbildung der Probenoberfläche in Abhängigkeit von unterschiedlichen physikalischen Parametern ergeben.

So ist beispielsweise die Differenz zwischen dem Punkt 2 im ansteigenden Ast der Kraft-Zeit-Kurve und der Maximal-Kraft ein quantifizierbares Maß für die lokale Steifigkeit der Probe. Wird diese charakteristische Größe aus der aufgenommenen Kraft-Zeit-Kurve gemäß der Erfindung ausgewertet, so kann man ein lokales Steifigkeitsbild der Probe erhalten.

Der minimale attraktive Kraftwert 4 beim Ablösen der Spitze von der Probenoberfläche wiederum ist ein quantifizierbares Maß für die lokale Adhäsion der Probe und ergibt aufgetragen über dem abgetasteten Bereich ein Adhäsionsbild.

Der minimale Kraftwert beim Anschnappen der Rastersonde an die Probenoberfläche im Punkt 1 wiederum ist ein quantifizierbares Maß für die lokale Anziehung der Probe und ergibt aufgetragen über dem abgetasteten Bereich ein Anziehungsbild der Oberfläche. Aus den Anstiegszeiten vom Beginn des Kontaktes bis zur maximalen Kraft und der Abfallzeit von der maximalen Kraft bis zum Erreichen des Nulldurchganges ergeben Anstiegsund Abfallzeitabbildungen der Probenoberfläche.

Des Weiteren können auch integrale Größen ausgewertet werden. So kann das Integral unter der Kraft-Zeit-Kurve im Bereich des repulsiven Kontaktes bestimmt werden sowie das Integral unter der Kraft-Zeit-Kurve vom Beginn des Kontaktes bis zum Erreichen der maximalen Kraft in Punkt 3. Zieht man diese beiden Integralwerte voneinander ab, so erhält man eine quantifizierbare Aussage über die in der Probe dissipierte Arbeit.

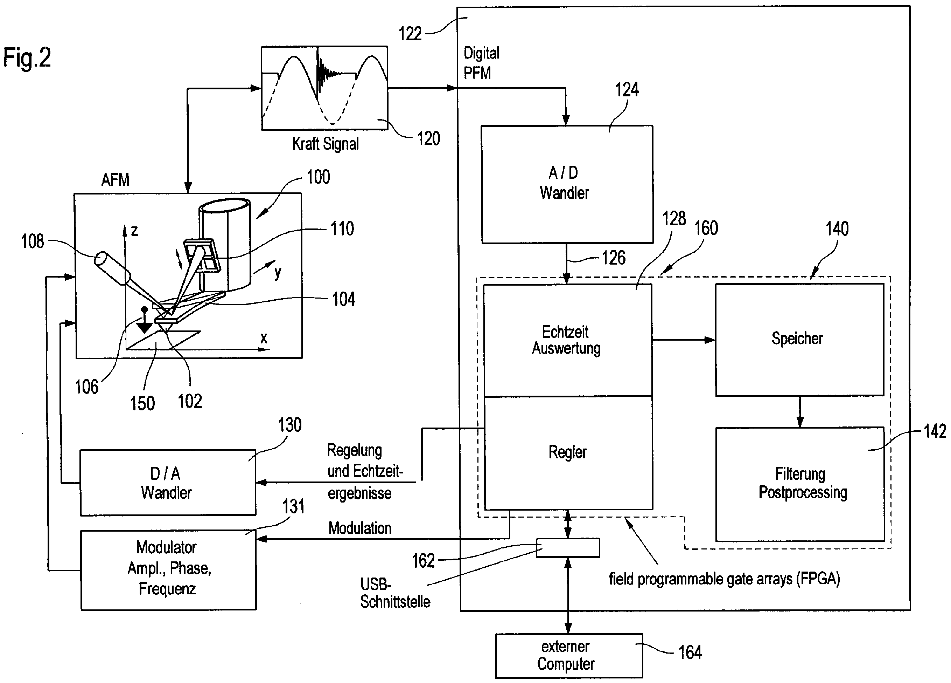

In Figur 2 ist im Rahmen eines Blockschaltbildes beispielhaft der Aufbau eines erfindungsgemäßen Raster-Sonden-Mikroskopes, mit einer programmierbaren Logik dargestellt. Das Raster-Sonden-Mikroskop ist mit der Bezugsziffer 100 bezeichnet. Das Raster-Sonden-Mikroskop umfasst einen Rastersonde 102, die beispielsweise eine Spitze ist. Die Rastersonde ist an einem Balken 104 aufgehängt. Die Rastersonde wird in z-Richtung 106, d. h. in senkrechter Richtung relativ zur Probenoberfläche in Oszillation versetzt. Die Durchbiegung des Balkens 104, an dem die Spitze 102 angeordnet ist, wird durch einen von einer Laserdiode 108 ausgesandten und reflektierten Strahl, der auf einem Vier-Quadranten-Detektor 110 detektiert wird, ausgewertet. Das aufgrund der Durchbiegung des Balkens 104, der auch als Cantilever bezeichnet wird, erhaltene analoge Kraftmeßsignal ist mit der Bezugsziffer 120 belegt. Das analoge Kraftsignal 120 wird einer Steuereinheit 122 gemäß der Erfindung zugeleitet. Die Steuereinheit 122 umfasst einen A/D-Wandler 124, der die analogen Daten des Kraftsignals 120 in einen digitalen Datenstrom 126 wandelt. Der digitale Datenstrom wird ohne Zwischenschaltung eines Bussystems an eine programmierbare Logik, die vorliegend als FPGA ausgeführt ist, angelegt. Dargestellt ist bei dem Ausführungsbeispiel lediglich ein A/D-Wandler 124. Dies ist eine vereinfachte Darstellung. Bei bevorzugten Systemen sind wenigstens vier A/D-Wandler vorgesehen, nämlich je einer für die x-Richtung und die y-Richtung, die die Ebene charakterisieren, in der der Scantisch mit der Probe 150 unterhalb der Rastersonde 102 bewegt wird, sowie ein A/D-Wandler für die z-Richtung. Diese 3 A/D-Wandler dienen somit dazu, die Position des Scantisches in allen drei Raumrichtungen der als field programmable gate array (FPGA) ausgelegten programmierbare Logik 160 als digitalen Datenstrom zur Verfügung zu stellen. Darüber hinaus können ein oder mehrere A/D-Wandler zur Aufnahme des Messignales, hier des Kraft-Zeit-Signales vorgesehen sein. Der digitale Datenstrom der A/D-Wandler liegt an der programmierbaren Logik 160 parallel und damit gleichzeitig an und wird von dieser gleichzeitig verarbeitet. Die A/D-Wandler haben bevorzugt eine Breite von 14 bit oder mehr.

Mit Hilfe der programmierbaren Logik werden die Signale der A/D-Wandler, die in Echtzeit vorliegen in Echtzeit ausgewertet. Unter Echtzeit versteht man, dass das Auswerteergebnis garantiert innerhalb einer fest vorgegebenen Zeitspanne, also hier spätestens bis zum Ende des aktuellen Modulationszyklus bspw. für die Spitze 102 vorliegt, so dass das Ergebnis als Istgröße für einen Regler dienen kann. Die Regelung erfolgt mittels eines Reglers, der wiederum Teil des field programmable gate arrays (FPGA) ist. Die programmierbare Logik 160 (FPGA) steuert wiederum direkt ohne Zwischenschaltung eines Datenbusses einen bzw. mehrere D/A-Wandler an. Bevorzugt handelt es sich bei den D/A-Wandlern 130 um solche mit einer Breite von 14 bit oder mehr. Bei dem erfindungsgemäßen Rastersondenmikroskop mit programmierbarer Logik werden wenigstens drei D/A-Wandlern vorgesehen, nämlich um die Probe in den drei Dimensionen in x-, y- und z-Richtung verfahren zu können. Die programmierte Logik 160 kann beispielsweise durch "Field Programmable Gate Arrays", kurz: FPGAs, realisiert sein. Derartige programmierte Logiken sind beispielsweise in
Ashok K. Sharma:
"Programmable Logic Handbook: PLDs, CPLDs and FPGAs (McGraw-Hill Professional Publishing; ISBN: 0070578524)" oder in
"W. Bolton, Bill Bolton: Programmable Logic Controllers : An Introduction (Butterworth-Heinemann; ISBN: 0750647469)"
   beschrieben.

Als Regelgröße bei einem Rastersondenmikroskop im pulsed force mode beschrieben wird, können beispielsweise die konstante Maximalkraft (unter Berücksichtigung von z.B. durch Interferenzen oder langreichweitigen Kräften hervorgerufenen Meßartefakten), der konstante Energieeintrag, die konstante Eindringtiefe, usw. oder Kombinationen dieser Größen für die Regelung in Betracht kommen.

Die Berechnung der Regler-Istgröße erfolgt in der programmierbaren Logik. Die Regelgrößen werden von der programmierbaren Logik ohne Zwischenschaltung eines Datenbusses einem oder mehrere D/A-Wandler 130 zum Bewegen des Probentisches in den drei Raumrichtungen oder einem Modulator 131 zur Modulation der Amplitude, Phase und Frequenz der Spitze 102 des Rastersondenmikroskopes 100 übermittelt. Aufgrund der Architektur der programmierbaren Logik 160 können die D/A-Wandler und der Modulator parallel angesteuert werden. Bei dem in Fig. 2 gezeigten System sind wenigstens drei periphere Bauteile 124, 130, 131 an die programmierbare Logik 160 angeschlossen.

Der Modulator 131 ermöglicht es im "Pulsed Force Mode" die vertikale Oszillation der Messspitze zu beeinflussen. Der digitale Aufbau erlaubt es, beliebige Kurvenformen für die Modulation zu verwenden. Durch die enge Anbindung an die oben beschriebene Echtzeitauswertung ist neben einem interaktiven Nutzereingriff auch ein durch Regelparameter automatisch gesteuerten Einfluss auf Phase, Amplitude und Frequenz der Modulation möglich, was beispielsweise die Korrektur von Piezo-Nichtlinearitäten des Raster-Sonden-Mikroskops gestattet.

Neben Echtzeit-Regelung ermöglicht die Echtzeitauswertung mit Hilfe der programmierbaren Logik 160 können in der programmierbaren Logik auch ein Teil von Daten in einem Speicherbereich abgelegt werden. Die Daten im Speicherbereich 140, können einem Postprocessing-Prozeß 142 oder einer Filterung unterzogen werden. An die programmierbare Logik 140 kann über eine Schnittstelle bspw. eine USB-Schnittstelle 162, die wiederum direkt mit der programmierbaren Logik 160 verbunden ist, ein externer Computer 164 angeschlossen sein. Der externe Computer dient zur Eingabe der Mess- und Steuergrößen sowie als Speichermedium für Messdaten. Die USB-Schnittstelle ist im Sinne dieser Anmeldung ein peripheres Bauteil.

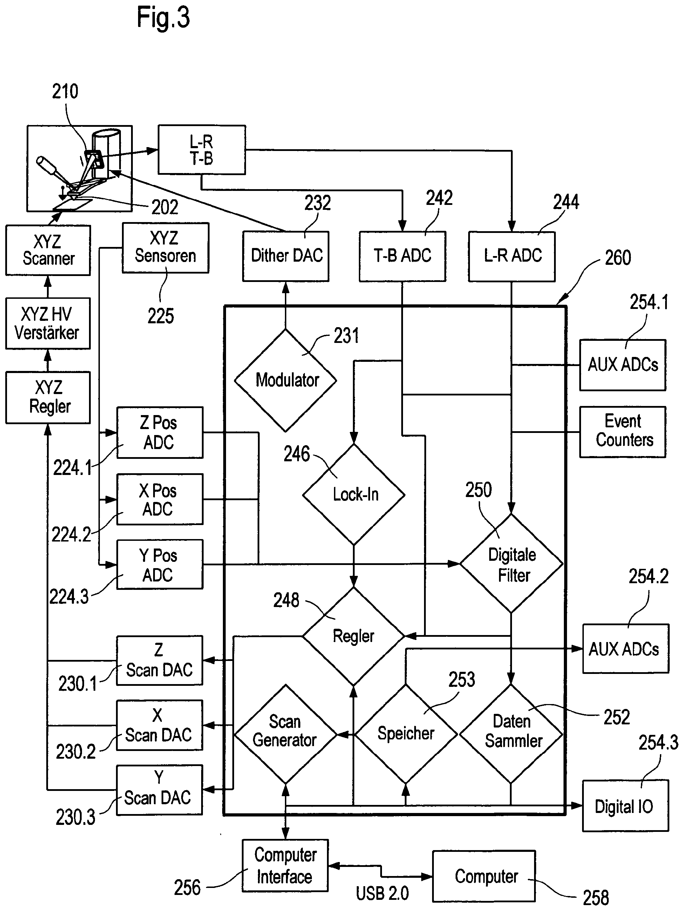

In Figur 3 ist ein detailliertes Ausführungsbeispiel eines Rastersondenmikroskopes mit einer erfindungsgemäßen programmierbaren Logik dargestellt. Gleiche Bauteile wie in Figur 2 sind mit um 100 erhöhte Bezugsziffern belegt. Bei dem Ausführungsbeispiel gemäß Figur 3 wird neben der Messwerterfassung und Auswertung durch die programmierbare Logik auch die Bewegung des Proben- oder Scantisches in allen drei Raumrichtungen geregelt, sowie die Schwingung der Kraftspitze des Rastersondenmikroskopes.

Deutlich zu erkennen sind hier die drei an die programmierbare Logik 260 angeschlossenen A/D-Wandler 224.1, 224.2, 224.3 zur Aufnahme der Position des Scantisches über die x-,y-,z-Sensoren 225. Die Daten für die Scanregelung werden über die D/A-Wandler 230.1, 230.2, 230.3 zur Verfügung gestellt und an den Regler übermittelt. Die in der programmierbaren Logik aufgebaute Zentraleinheit erzeugt das Signal für den Modulator 231, mit dem über den digitalen Ausgang 232 die Modulation der Kraftspitze 202 gesteuert wird. Des Weiteren mit der programmierbaren Logik 260 verbunden, ist die der Vier-Quadranten-Detektors 210 des Rastersondenmikroskopes. Beim Vier-Quadranten-Detektors 210 wird ein links-/rechts-Signal über den Eingang TB/ADC 242 bzw. LR/ADC 244 aufgenommen. Diese Signale werden in der programmierbaren Logik bearbeitet und einem Lock-in-Verstärker 246 bzw. Regler 248 der ebenfalls in der programmierbaren Logik ausgeführt ist, zugeführt. Mit dem Regler 248 wird über die digitalen Ausgänge 230.1, 230.2, 230.3 der Scantisch ausgesteuert und in die entsprechende Position verbracht. Die Anregung der Kraftspitze 202 erfolgt mit Hilfe des Sinusgenerators bzw. Modulators 231 über den Ausgang 232. Des Weiteren in der programmierbaren Logik 260 verwirklicht ist ein digitaler Filter 250 für die aufgenommenen Daten sowie Bereiche 252, 253 zur Sammlung und Speicherung der zur Verfügung gestellten Daten. Optional können die programmierbare Logik noch zusätzliche A/D-Wandler sog. Aux/ADC 254.1 und Aux/DAC 254.2 sowie digitale Ein- und Ausgabeeinrichtungen 254.3 angeschlossen sein. Die im Speicher 252 hinterlegten Daten können über eine Computerschnittstelle 256 bspw. eine USB-Schnittstelle an einen externen Computer 258 weitergeleitet und dort abgespeichert werden. Der Computer 258 kann auch dazu dienen Messparameter etc. zu setzen. Die Schnittstelle 256 ist erfindungsgemäß als peripheres Bauteil direkt an die programmierbare Logik 260 angeschlossen.

Mit der Erfindung wird somit erstmals sowie eine Vorrichtung zur Verfügung gestellt, mit der es möglich ist, eine Vielzahl Eingabe-/Ausgabe-Operationen parallel durchzuführen, in dem peripheren Bauteil direkt ohne Zwischenschaltung von Datenbussen an eine programmierbare Logik angeschlossen sind. Die programmierbare Logik umfasst nicht nur die Datenauswertung von digital zu Verfügung gestellten Daten, sondern beispielsweise auch die Steuerung der Eingabe-/Ausgabeschnittstellen sowie die Regelung des x-,y-,z-verfahrbaren Probentisches sowie die Anregung der Feldspitze.

## Patentansprüche

1. Rastersondenmikroskop, umfassend wenigstens
- eine programmierbare Logik (160) in Form eines field programable gate arrays (FPGA)
- wenigstens fünf periphere Bauteile (124, 130, 131),
wobei
die wenigstens fünf peripheren Bauteile (124, 130, 131) direkt mit der programmierbaren Logik (160) verbunden sind, ohne Zwischenschaltung eines Datenbusses für mehr als zwei Teilnehmer sowie die programmierbare Logik (160) die peripheren Bauteile (124, 130, 131) direkt ansteuert und
das Rastersondenmikroskop mit wenigstens fünf peripheren Bauteilen als ein erstes peripheres Bauteil (124) einen A/D-Wandler umfasst, der ein Messsignal aufnimmt und einen ersten digitalen Messdatenstrom, zur Verfügung stellt sowie
ein zweites, drittes, viertes peripheres Bauteil (130) das drei D/A-Wandler umfasst, um die Probe in die drei Raumrichtungen (x,y,z) zu verfahren und ein fünftes peripheres Bauteil, das als Modulator (131) ausgebildet ist, wobei
die programmierbare Logik (160) einen Regler, der in der programmierbaren Logik ausgeführt ist, umfasst,
die programmierbare Logik (160) die drei D/A-Wandler (130) und den Modulator parallel ansteuert, wobei die programmierbare Logik über Netzlisten so verschaltet wird, dass die programmierbare Logik alle gleichzeitig ablaufenden Aufgaben parallel verarbeitet und die programmierbare Logik mit den einzelnen peripheren Bauteilen in einer Sterntopologie direkt verbunden ist.

2. Rastersondenmikroskop nach Anspruch 1, **dadurch gekennzeichnet, dass** die peripheren Bauteile des Weiteren ein oder mehrere der nachfolgenden Bauteile umfassen:
ein digitaler Ein- und Ausgang (DIO)
ein digitaler Ausgang (DO)
ein digitaler Signalprozessor (DSP)
ein Mikroprozessor
eine weitere programmierbare Logik

3. Rastersondenmikroskop nach Anspruch 1 oder 2, **dadurch gekennzeichnet, dass** der A/D-Wandler, ein A/D-Wandler mit einer Breite ≥ 14 bit bevorzugt ≥ 16 bit und/oder eine A/D-Wandler mit einer Abtastrate von mehr als 100 kSample/s bevorzugt mehr als 1 MSamples/s, ganz bevorzugt mehr als 5 MSamples/s ist.

4. Rastersondenmikroskop nach einem der Ansprüche 1 bis 2, **dadurch gekennzeichnet, dass** die D/A-Wandler, D/A Wandler mit einer Breite ≥ 14 Bit, bevorzugt ≥ 16 Bit und oder eine Abtastrate mit mehr als 100 kSample/s, insbesondere mehr als 5 MSample/s, ganz besonders mehr als 50 MSample/s sind.

5. Rastersondenmikroskop gemäß Anspruch 2, **dadurch gekennzeichnet, dass** der digitale Ein- und Ausgang (DIO) eine der nachfolgenden Schnittstellen ist:
eine RS232-Schnittstelle
eine 12C-Schnittstelle
eine Ethernet-Schnittstelle
eine USB-Schnittstelle

6. Rastersondenmikroskop gemäß einem der Ansprüche 1 bis 5, **dadurch gekennzeichnet, dass** die programmierbare Logik (160) des Weiteren einen Auswertebereich umfasst, um den vom ersten peripheren Bauteil zur Verfügung gestellten ersten digitalen Messdatenstrom auszuwerten.

7. Rastersondenmikroskop gemäß einem der Ansprüche 1 bis 6, wobei das Rastersondenmikroskop eines oder mehrere der nachfolgenden Mikroskope ist:
ein Rasterkraftmikroskop
ein Rastertunnelmikroskop

8. Rastersondenmikroskop nach einem der Ansprüche 1 bis 7, **dadurch gekennzeichnet, dass** die programmierbare Logik einen oder mehrere der nachfolgenden Hardware-Bauteile umfasst:
einen Prozessor (Hard-IP-Core)
einen Digitalen Signal Prozessor (DSP als Hard-IP-Core).

## Claims

1. Scanning probe microscope, comprising at least
one programmable logic (160) in the form of a field-programmable gate array (FPGA),
at least five peripheral components (124, 130, 131),
wherein
the at least five peripheral components (124, 130, 131) are directly connected to the programmable logic (160), without the interposition of a data bus for more than two users, and the programmable logic (160) drives the peripheral components (124, 130, 131) directly, and
the scanning probe microscope with at least five peripheral components comprises an A/D converter as a first peripheral component (124) which receives a measurement signal and provides a first digital measurement data stream, and
a second, third, fourth peripheral component (130) which comprises three D/A converters for moving the sample in the three spatial directions (x, y, z) and a fifth peripheral component configured as modulator (131), wherein the programmable logic (160) comprises a controller implemented in the programmable logic,
the programmable logic (160) drives the three D/A converters (130) and the modulator in parallel, wherein the programmable logic is interconnected via network lists so that the programmable logic processes all concurrent tasks in parallel and the programmable logic is directly connected to the individual peripheral components in a star topology.

2. Scanning probe microscope according to claim 1, **characterized in that** the peripheral components further comprise one or more of the following components:
a digital input and output (DIO),
a digital output (DO),
a digital signal processor (DSP),
a microprocessor,
another programmable logic.

3. Scanning probe microscope according to claim 1 or 2, **characterized in that** the A/D converter is an A/D converter with a width ≥ 14 bit, preferably ≥ 16 bit, and/or an A/D converter with a sampling rate of more than 100 kSample/s, preferably more than 1 MSample/s, most preferably more than 5 MSample/s.

4. Scanning probe microscope according to one of the claims 1 to 2, **characterized in that** the D/A converter is D/A converter with a width ≥ 14 bit, preferably ≥ 16 bit and/or a sampling rate of more than 100 kSample/s, in particular more than 5 MSample/s, more particularly more than 50 MSample/s.

5. Scanning probe microscope according to claim 2, **characterized in that** the digital input and output (DIO) is one of the following interfaces:
an RS232 interface,
an I2C interface,
an Ethernet interface,
a USB interface.

6. Scanning probe microscope according to one of the claims 1 to 5, **characterized in that** the programmable logic (160) further comprises an evaluation area in order to evaluate the first digital measurement data stream provided by the first peripheral component.

7. Scanning probe microscope according to one of the claims 1 to 6, wherein the scanning probe microscope is one or more of the following microscopes:
a scanning force microscope,
a scanning tunneling microscope.

8. Scanning probe microscope according to one of the claims 1 to 7, **characterized in that** the programmable logic comprises one or more of the following hardware components:
a processor (hard IP core),
a digital signal processor (DSP as hard IP core).

## Revendications

1. Microscope en champ proche comprenant au moins
- une logique programmable (160) formée par un réseau prédiffusé programmable (FPGA)
- au moins cinq composants périphériques (124, 130, 131),
dans lequel les au moins cinq composants périphériques (124,130, 131) sont directement reliés à la logique programmable (160), sans bus de données intercalé pour plus de deux appareils connectés, et la logique programmable (160) commande directement les composants périphériques (124, 130,131) et
le microscope en champ proche muni d'au moins cinq composants périphériques comprend comme premier composant périphérique (124) un convertisseur A/N qui capte un signal de mesure et fournit un premier flux de données numérique,
des deuxième, troisième et quatrième composants périphériques (130) comprenant trois convertisseurs N/A pour déplacer la sonde sur les trois axes de l'espace (x, y, z) et
un cinquième composant périphérique conçu comme un modulateur (131), dans lequel
la logique programmable (160) comprend un régulateur qui est réalisé dans la logique programmable,
la logique programmable (160) commande les trois convertisseurs N/A (130) et le modulateur en parallèle, la logique programmable étant connectée à l'aide de listes de réseau de telle manière que la logique programmable traite en parallèle toutes les tâches exécutées simultanément et la logique programmable étant directement connectée aux différents composants périphériques dans une topologie en étoile.

2. Microscope en champ proche selon la revendication 1, **caractérisé en ce que** les composants périphériques comprennent en outre un ou plusieurs des composants suivants :
une entrée-sortie numérique (DIO)
une sortie numérique (DO)
un processeur de signaux numérique (DSP)
un microprocesseur
une autre logique programmable.

3. Microscope en champ proche selon la revendication 1 ou 2, **caractérisé en ce que** le convertisseur A/N est un convertisseur A/N ayant une largeur de ≥ 14 bits, de préférence ≥ 16 bits, et/ou un convertisseur A/N ayant un taux d'échantillonnage de plus de 100 kéch/s, de préférence plus de 1 Méch/s, en particulier plus de 5 Méch/s.

4. Microscope en champ proche selon l'une des revendications 1 à 2, **caractérisé en ce que** les convertisseurs N/A sont des convertisseurs N/A ayant une largeur de ≥ 14 bits, de préférence ≥ 16 bits, et/ou un taux d'échantillonnage de plus de 100 kéch/s, de préférence plus de 5 Méch/s, en particulier plus de 50 Méch/s.

5. Microscope en champ proche selon la revendication 2, **caractérisé en ce que** l'entrée-sortie numérique (DIO) est l'une des interfaces suivantes :
une interface RS232
une interface I2C
une interface Ethernet
une interface USB.

6. Microscope en champ proche selon l'une des revendications 1 à 5, **caractérisé en ce que** la logique programmable (160) comprend en outre une plage d'interprétation afin d'interpréter le premier flux de données de mesure numérique fourni par le premier composant périphérique.

7. Microscope en champ proche selon l'une des revendications 1 à 6, lequel microscope en champ proche est un ou plusieurs des microscopes suivants :
un microscope à force atomique
un microscope à effet tunnel.

8. Microscope en champ proche selon l'une des revendications 1 à 7, **caractérisé en ce que** la logique programmable comprend un ou plusieurs des composants matériels suivants :
un processeur (bloc de PI matériel)
un processeurs de signaux numérique (PSN constituant un bloc de PI matériel).
